# EUROPEAN PATENT APPLICATION

(11) **EP 1 826 995 A2**
(43) Date of publication of application: **29.08.2007**
(21) Application number: 07102969.8
(22) Date of filing: 23.02.2007
(51) Int. Cl.: H04M 1/725

(54) **Apparatus for displaying state information of a mobile communication terminal by means of a notifying animation and a method therefor**

(30) Priority: 24.02.2006 KR 20060018256
(71) Applicant: Samsung Electronics Co., Ltd., Suwon-si, Gyeonggi-Do (KR)
(72) Inventor: Im, You-Jin, Suwon-si Gyeonggi-do (KR); Hong, Nho-Kyung, Suwon-si Gyeonggi-do (KR); Choi, Hee-Woong, Suwon-si Gyeonggi-do (KR)
(74) Representative: Zimmer, Franz-Josef

(57) **Abstract**

An apparatus and method for displaying state information of a mobile communication terminal by a notifying animation device including at least one character. The method includes collecting the measure of the state information corresponding to at least one of predetermined notifying items, setting the notifying level of at least one of the characters constituting the notifying animation according to the measure of the state information, generating the notifying animation by determining the position of the at least one character according to the notifying level, and outputting the notifying animation to the display screen.

## Description

The present invention generally relates to a mobile communication terminal, and more particularly to an apparatus for displaying state information of a mobile communication terminal and a method therefor.

Mobile communication terminals generally provide users with state information representing the operational state of an associated terminal by means of icons displayed on the screen. The state information may include signal receiving sensitivity, battery power level, reception of an SMS (Short Messaging Service) or MMS (Multimedia Messaging Service) message, current time, etc.

While such state information may be considered trivial, it is indispensable for a user to decide whether the mobile communication terminal may perform a normal function. For example, their signal receiving sensitivity serves to inform the user if the mobile terminal can smoothly perform the normal communication function, and the battery power level to inform the user if the remaining power is sufficient for the normal operation of the mobile terminal.

Nevertheless, conventional mobile communication terminals allot very small regions for displaying icons of state information, such as signal receiving sensitivity and battery power level, on the display screen in order to make the screens look elegant. Accordingly, conventional mobile communication terminals make it difficult for users to directly perceive their state information, especially, for a person with bad sight or presbyopia. A method of enlarging the icon size has been considered to resolve such a problem, but this method may seriously harm the aesthetics of the display screen.

It is the object of the present invention to provide a method and apparatus for more easily and directly notifying the user of the state information of the mobile communication terminal without harming the aesthetics of the display screen.

This object is solved by the subject matter of the independent claims.

Preferred embodiments are defined in the dependent claims.

The present invention also provides a method and apparatus for more easily and directly notifying the user of the state information of the mobile communication terminal with considerably enhanced aesthetics of the display screen.

According to an aspect of the present invention, an apparatus is provided for displaying state information of a mobile communication terminal by a notifying animation, the apparatus including a state information collector for collecting the state information of the mobile communication terminal, a notifying animation generator for generating a notifying animation representing the state information by using at least one character, a memory device for storing character images employed for generating at least one character used for the notifying animation, and a controller for controlling both the state information collector to collect the state information and the notifying animation generator to generate the notifying animation representing a measure of the state information to display the notifying animation on a display screen.

According to another aspect of the present invention, a method is provided for displaying state information of a mobile communication terminal by a notifying animation having at least one character, the method including collecting a measure of the state information corresponding to at least one of predetermined notifying items, setting a notifying level of at least one of the characters constituting the notifying animation according to the measure of the state information, generating the notifying animation by determining a position of the at least one character according to the notifying level, and outputting the notifying animation to a display screen.

The present invention will become more apparent from the following detailed description when taken in conjunction with the accompanying drawing in which:
FIG. 1 is a block diagram of a mobile communication terminal according to the present invention;
FIG. 2 is a flowchart for illustrating the process of generating a notifying animation in a mobile communication terminal according to the present invention;
FIG. 3 is a schematic view for illustrating a selection of the notifying level corresponding to the state information of a mobile communication terminal according to the present invention;
FIG. 4 is a flowchart for illustrating the process of generating a notifying animation according to the selected notifying level in a mobile communication terminal according to the present invention; and
FIG. 5 is a schematic view for illustrating additional character images added to a basic character image in a mobile communication terminal according to the present invention.

Preferred embodiments of the present invention will be described herein below with reference to the accompanying drawings. In the drawings, the same or similar elements are denoted by the same reference numerals even though they are depicted in different drawings. In the following description, well-known functions or constructions are not described in detail since they would obscure the invention in unnecessary detail.

In the present invention, state information of a mobile communication terminal is collected, such as signal receiving sensitivity and battery power level, and is represented by an aesthetic notifying animation displayed on a display screen. To this end, a mobile communication terminal according to the present invention stores a plurality of images used for generating at least a character constituting the notifying animation, so the generated characters may be animated and displayed on the display screen. Accordingly, the animation provided by the invention enables a user to directly perceive the operational state of the terminal without impairing the aesthetics thereof.

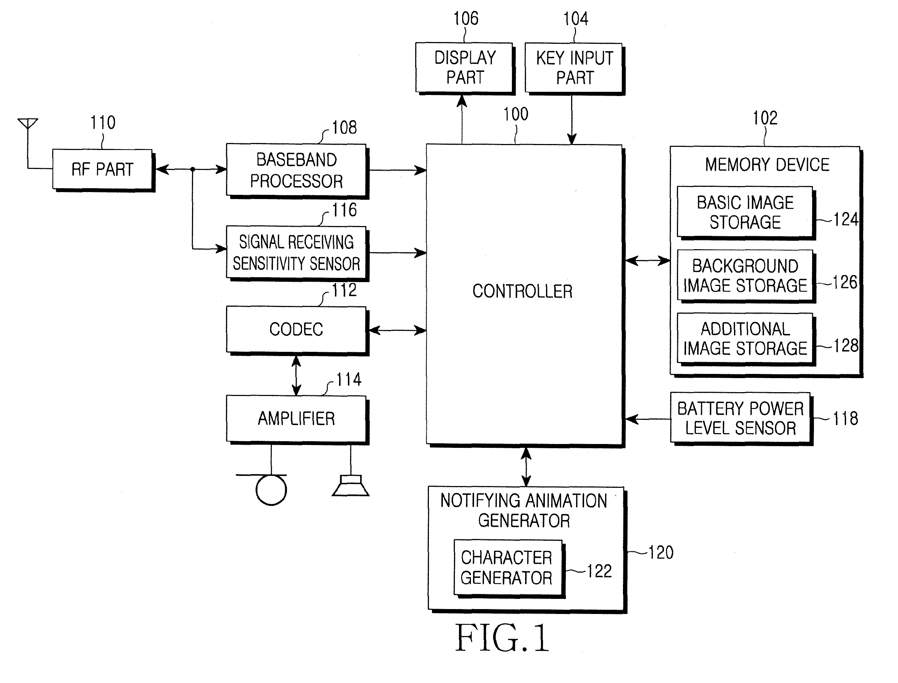

Referring to FIG. 1, a process of generating a notifying animation representing the state information of a mobile communication terminal, such as signal receiving sensitivity and battery power level, will now be described. According to the present invention, a mobile communication terminal includes a memory device 102, a key input part 104, a display part 106, a baseband processor 108, a codec (coder-decoder) 112, a signal receiving sensitivity sensor 116, a notifying animation generator 120, and a battery power level sensor 118, which are controlled by a controller 100. The controller 100 processes voice signals and character data according to a protocol for telephoning, data communication, and wireless Internet connection. The controller 100 also controls the display part 106 to display picture information input by a user through the key input part 104.

The controller 100 also collects the state information of the mobile communication terminal, such as signal receiving sensitivity and battery power level. Accordingly, the signal receiving sensitivity sensor 116 and battery power level sensor 118 constitute a state information collector for collecting the state information of the mobile terminal. Accordingly, the controller 100 detects the signal intensity through the signal receiving sensitivity sensor 116 and the battery power level through the battery power level sensor 118, and loads the images for generating at least one character to constitute a notifying animation that represents the detected state information. The notifying animation may include at least one notifying character, and a background character to serve as the background of the notifying character.

For example, if the notifying animation to represent the signal receiving sensitivity or battery power level includes a monkey ascending and descending an ivy stem, the ivy stem may be regarded as the background character, and the monkey as the notifying character. The background character may serve as background information representing maximum to minimum values of the signal receiving sensitivity or battery power level of the mobile terminal, and the notifying character as the indicator for showing the actual operational state of the terminal.

Of course, the controller 100 may employ an additional character besides the basic character set as the notifying character to enable the user to more directly perceive the state information of the terminal. For example, if the notifying animation, as described above, includes a monkey ascending and descending an ivy stem, the facial expression of the monkey or something taken by it, such as a banana, may be employed as an additional character to help the user more easily perceive the state information of the terminal. The notifying character includes the basic character combined with the additional character. The notifying animation generated by the characters is output by the controller to the display part 106, so the user may easily perceive the state information of the terminal through the animation displayed on the screen instead of a small icon. This notifying animation also serves to enhance the aesthetics of the display screen.

The memory device 102 connected with the controller 100 includes a basic image storage 124 for storing the images to generate the basic characters, background image storage 126 for storing the images to generate the background characters, and additional image storage 128 for storing the images to generate the additional characters. The memory device 102 may include a ROM (Read Only Memory), flash memory, and RAM (random access memory). The ROM serves to store the programs used by the controller 100 to control and process together with various reference data. The RAM provides the working memory for the controller 100, and the flash memory serves to store various available data that can be revised.

The key input part 104 includes various functional and numeric keys to enable the user to input key signals to the controller 100. The RF (Radio Frequency) part 110 serves to exchange RF signals with a base station. It converts a received signal into an IF (Intermediate Frequency) signal applied to the baseband processor 108, and an IF signal received from the baseband signal into an RF signal transmitted. The baseband processor 108 is a BAA (Baseband Analog ASIC) to provide an interface between the controller 100 and RF part 110, which converts a baseband digital signal received from the controller 100 into an IF signal applied to the RF part 110, and an analog signal received from the RF part 110 into a baseband digital signal applied to the controller 100.

The receiving signal sensitivity sensor 116 measures the intensity of a signal received from the RF part 110, which intensity is used as the sensitivity information applied to the controller 100. The battery power level sensor 118 checks the level of the voltage or current supplied by the battery to measure the remaining battery power, the information of which is applied to the controller 100.

The notifying animation generator 120 generates a notifying animation by using the basic and the background character received from the controller 100. If an additional character occurs, the notifying character becomes a character combination composed of the basic and additional characters, which is presented on the background character image. The notifying animation generator 120 includes a character generator 122 for generating the notifying character.

The codec 112 connected with the controller 100 is also connected through an amplifier 114 to a microphone and speaker to encode a voice signal from the microphone in PCM (Pulse Code Modulation) into a voice data applied to the controller 100, and to decode a voice data received from the controller 100 in PCM into a voice signal delivered through the amplifier 114 to the speaker. The amplifier 114 amplifies a voice signal from the microphone and outputs it through the speaker, wherein both the volume of the speaker and the gain of the microphone are controlled by the controller 100.

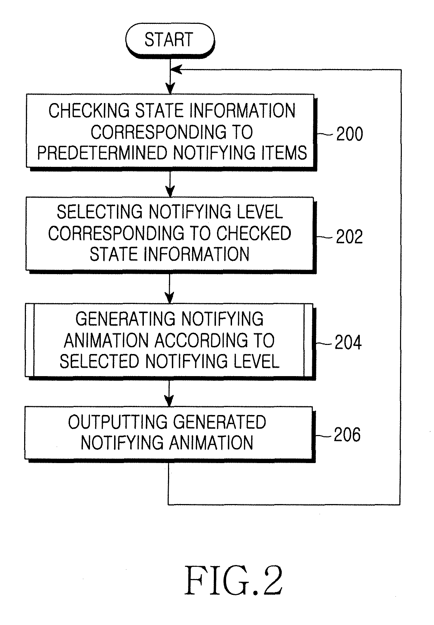

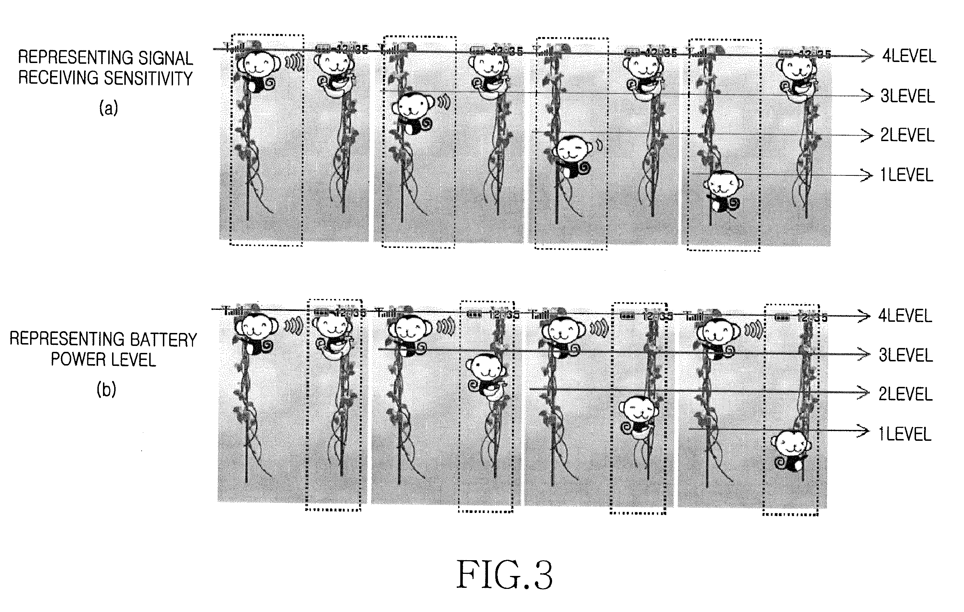

Figs. 2 and 3 respectively show a process of generating a notifying animation, and an example of selecting the notifying level corresponding to the present state information in a mobile communication terminal according to the present invention.

Referring to FIG. 2, turning on the mobile communication terminal, the controller 100 detects the state information corresponding to predetermined notifying items in step 200. It is assumed that the state information corresponding to predetermined notifying items include the signal receiving sensitivity and battery power, as described above. Accordingly, the controller 100 checks, in step 200, the receiving signal sensitivity and the battery power level, respectively, through the signal receiving sensitivity sensor 116 and the battery power level sensor 118. Then, the controller 100 proceeds to step 202 to select the notifying level corresponding to the checked state information. The notifying level indicates a position of the notifying character being placed on the background character according to the detected receiving signal sensitivity and battery power level representing the state information. For example, if the signal receiving sensitivity and the battery power level are represented by a monkey (notifying character) ascending and descending an ivy stem (background character) as mentioned above, the height of the monkey along the ivy stem may be used to represent the notifying level.

Alternatively, instead of the vertical position of the notifying character as described above, the position of the notifying character along a horizontal line may be used to represent the state information. For example, if the signal receiving sensitivity and the battery power level are represented by a runner (notifying character) running along a horizontal track (background character), the position of the runner along the horizontal track may be used to represent the notifying level.

Such notifying level may represent the state information directly, or by dividing the range between a maximum and minimum level of the signal receiving sensitivity or battery power level into a plurality of intervals, one of which intervals is selected to place the notifying character according to the measure of the state information. The notifying level directly representing the state information is called the analog notifying level, and that by placing the notifying character in a selected interval is called the digital notifying level.

Diagrams (a) and (b) of FIG. 3 respectively show examples of the signal receiving sensitivity and the battery power level represented by a digital notifying level. In diagrams (a) and (b) of FIG. 3, the background character is divided into four intervals each representing different information. Referring to diagram (a) of FIG. 3, if assuming that the maximum and minimum values of the signal receiving sensitivity are respectively 100 and 1, the four intervals are respectively represented by the first level of 1 to 25, the second level of 26 to 50, the third level of 51 to 75, and the fourth level of 76 to 100. Accordingly, the user may know the present signal receiving sensitivity of the mobile communication terminal by noting the interval where the notifying character is placed. Likewise, referring to diagram (b) of FIG. 3, the battery power level may be easily perceived by the user since the notifying character is placed in the interval corresponding to the measure of the remaining battery power.

Alternatively, instead of the digital notifying level as shown in FIG. 3, the measures of the state information may be notified in the analog notifying level. The selection of a notifying level in step 202 of FIG. 2 is not to select an interval according to the measure of the state information, but to determine the position corresponding to the measure of the state information along the background character. Thus, the setting of the notifying level in step 202 is to select a proper interval according to the measure of the state information in the digital notifying level, or to determine the position of the notifying character corresponding to the measure of the state information along the background character in the analog notifying level.

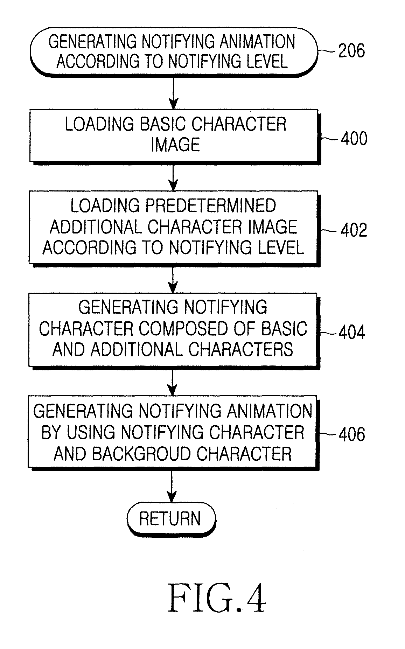

After setting the notifying level in step 202, the controller 100 goes to step 204 to generate the notifying animation composed of the background and notifying characters according to the notifying level. Of course, the notifying character may be a character combination of a basic character and an additional character. The additional character may be also presented in various forms. For example, if the notifying animation includes a monkey ascending and descending an ivy stem, the facial expression of the monkey may take varieties of forms according to the state information. In addition, if the notifying animation includes a runner running a horizontal track, the additional character may be presented as sweat of the runner, the amount of which directly represents the signal receiving sensitivity or battery power level. Thus, if there are various additional characters prepared to be combined with a basic character, the character generator 122 generates a notifying character by combining the basic and additional characters. Then, the notifying animation generator 120 generates the notifying animation by means of the notifying character generated from the character generator 122 in step 204, which will be more specifically described in connection with FIG. 4.

If the notifying character is generated in step 204 by means of the basic character or the character combination of the basic and addition characters, the controller 100 goes to step 206 to deliver the notifying animation to the display part 106. Then, the controller 100 returns to step 200 to check the state information of the mobile communication terminal in order to repeat the steps 202 to 206 to generate the notifying animation according to the checked state information.

Of course, the controller 100 performs a step of setting the notifying animation as the foreground image placed on the existing background image so as not to affect the background image. Hence, the user may set the background image of the display part 106 by using an arbitrary image skin without being affected by the notifying animation. This enables the user to more easily perceive the state information of the mobile communication terminal as well as enhancing the aesthetics of the display of the terminal.

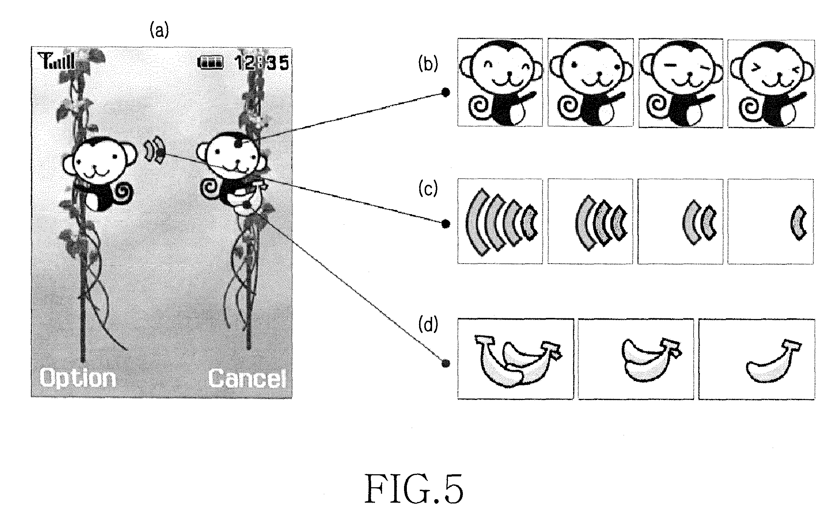

FIG. 4 shows a process of generating a notifying animation by using a character combination composed of basic and additional characters. Examples an additional character imaged added to the basic character are shown in FIG. 5.

Referring to FIG. 4, after setting the notifying level of the notifying character, the controller 100 goes to step 400 to load the basic character image for generating the basic character. Then, the controller 100 goes to step 402 to load at least one predetermined additional character image according to the notifying level. As described above, the additional character may be presented in various forms to reflect the measured state information. Accordingly, step 402 may be the procedure of the controller 100 selecting the additional character corresponding to the state information, and then loading the additional character image for generating the selected additional character.

Diagram (a) of FIG. 5 shows an example of a notifying animation including a basic character combined with an additional character according to the detected receiving signal sensitivity and battery power level. Diagrams (b) to (d) of FIG. 5 show various examples of additional character images to be added to the basic character as shown in diagram (a) of FIG. 5. If the notifying animation is represented by a monkey (basic character) ascending and descending an ivy stem (background character), as shown in diagram (a) of FIG. 5, diagram (b) of FIG. 5 shows examples of the additional characters representing various facial expressions of the monkey. Thus, the additional characters of diagram (b) of FIG. 5 combined with the basic character enables the notifying character to show various facial expressions according to the measure of the state information.

While the additional character images as shown in diagram (b) of FIG. 5 are commonly used regardless of the kind of the state information, those as shown in diagrams (c) and (d) of FIG. 5 are particular additional character images to be selectively used according to the kind of the state information. For example, the notifying animation shown in the left of diagram (a) of FIG. 5 represents the signal receiving sensitivity, and that on the right shows the battery power level. The characters shown in diagram (c) of FIG. 5 are wave images to directly convey the signal receiving sensitivity, and those in diagram (d) of FIG. 5 directly convey the battery power level.

Meanwhile, after loading the additional character image representing the present state information according to the notifying level in step 402, the controller 100 goes to step 404 to generate the notifying character composed of the basic and additional characters. If using the additional characters shown in diagrams (b) to (d) of FIG. 5, the controller combines in step 404 the basic character with the common additional character showing the facial expression corresponding to the notifying level and the particular additional character showing the wave or feed image according to the kind of the state information, as shown in diagram (a).

Subsequently, the controller 100 goes to step 406 to generate the notifying animation including the notifying character and background character. Finally, the controller 100 delivers the generated notifying animation to the display part 106. Thus, the additional character added to the basic character enables the user to more easily perceive the state information, such as the signal receiving sensitivity and battery power level, and only the position of the basic character is displayed. Of course, the controller 100 may selectively generate one or more notifying animations to the display part 106, as shown in diagram (a) of FIG. 5. Consequently, the invention enables the user to more easily and directly perceive the state information of the mobile communication terminal as well as enhancing the aesthetics of the display.

While the above description has shown the notifying character including the basic character combined with the additional character, it will easily noted that completely different characters may be used for the notifying character according to the measure of the state information. For example, for character images used for weather forecast, a minimum value of the signal receiving sensitivity belonging to the first interval of 1 to 25 may be represented by a dark cloud character featuring rain and hail, that belonging to the second interval of 26 to 50 may be represented by a dark cloud character not featuring rain and hail, that belonging to the third interval of 51 to 75 may be represented by a cloud character featuring no sun, and that belonging to the fourth interval of 76 to 100 may be represented by a cloud character featuring the sun.

While the invention has been shown and described with reference to a certain preferred embodiment thereof, it will be understood by those skilled in the art that various changes in form and details may be made therein without departing from the scope of the invention.

## Claims

1. An apparatus for displaying state information of a mobile communication terminal by a notifying animation, the apparatus comprising:
a state information collector for collecting the state information of said mobile communication terminal;
a notifying animation generator for generating a notifying animation representing the state information by using at least one character;
a memory device for storing character images employed for generating at least one character used for said notifying animation; and
a controller for controlling both said state information collector to collect the state information and said notifying animation generator to generate said notifying animation representing a measure of said state information to display said notifying animation on a display screen.

2. The apparatus as defined in claim 1, wherein said state information is one of signal receiving sensitivity and battery power level of said mobile communication terminal.

3. The apparatus as defined in claim 1 or 2, wherein said notifying animation includes:
a background character representing background information containing maximum and minimum measures of said state information; and
a notifying character used along with said background character to notify a user of said state information.

4. The apparatus as defined in claim 3, wherein said notifying character is one of a predetermined basic character and a character combination including said basic character and one of additional characters to represent additional information according to said state information.

5. The apparatus as defined in claim 4, wherein said notifying animation generator further includes a character generator for generating said character combination including said basic character and said additional character.

6. The apparatus as defined in claim 4 or 5, wherein said additional characters include common additional characters commonly used in said notifying animation, regardless of a kind of said state information, and individual additional characters individually used in said notifying animation according to the kind of said state information.

7. The apparatus as defined in claim 6, wherein said notifying animation generator combines said basic character with at least one of said common additional characters according to the measure of said state information.

8. The apparatus as defined in claim 6, wherein said notifying animation generator combines said basic character with at least one of said individual additional characters according to the kind and the measure of said state information.

9. The apparatus as defined in one of claims 1 to 8, wherein said controller sets said generated notifying animation as a foreground image displayed along with a predetermined background image on the display screen.

10. A method for displaying state information of a mobile communication terminal by a notifying animation including at least one character, the method comprising the steps of:
collecting a measure of the state information corresponding to at least one of predetermined notifying items;
setting a notifying level of at least one of the characters constituting said notifying animation according to the measure of the state information;
generating said notifying animation by determining a position of said at least one character according to said notifying level; and
outputting said notifying animation to a display screen.

11. The method as defined in claim 10, wherein said notifying animation includes:
a background character representing background information containing maximum and minimum measures of said state information; and
a notifying character used along with said background character to notify a user of said state information.

12. The method as defined in claim 11, wherein the step of setting the notifying level causes said notifying character to be set to one of a plurality of intervals dividing said background character according to one of the measure of said state information and a position directly representing the measure of said state information on said background character.

13. The method as defined in claim 11 or 12, wherein said notifying character is one of a predetermined basic character and a character combination including said basic character and one of additional characters to represent additional information according to said state information.

14. The method as defined in claim 13, wherein the step of generating said notifying animation comprises:
loading a basic character image for generating said basic character;
loading an additional character image for generating said additional character combined with said basic character;
combining said basic character image and additional character image to generate a notifying character; and
generating said notifying animation containing said notifying character.

15. The method as defined in claim 14, wherein the step of loading an additional character image comprises:
selecting one of common additional characters commonly used in said notifying animation regardless of a kind of said state information; and
loading the additional character image for generating said selected common additional character.

16. The method as defined in claim 15, wherein the step of selecting one of common additional characters is to select one of said common additional characters corresponding to the measure of said state information.

17. The method as defined in one of claims 14 to 16, wherein the step of loading the additional character image comprises:
selecting one of individual additional character kinds individually used in said notifying animation according to the kind of said state information;
selecting one of the individual additional characters of said selected character kind according to the measure of said state information; and
loading an image for generating said selected additional character.

18. The method as defined in one of claims 10 to 17, wherein the step of outputting said notifying animation comprises:
setting said generated notifying animation as a foreground image; and
displaying said notifying animation on a predetermined background image on the display screen.

19. The method as defined in one of claims 10 to 18, wherein said state information is one of signal receiving sensitivity and battery power level of said mobile communication terminal.
